# EUROPEAN PATENT SPECIFICATION

(11) **EP 3 292 678 B1**
(45) Date of publication and mention of the grant of the patent: **29.11.2023**
(21) Application number: 16790170.1
(22) Date of filing: 06.05.2016
(51) Int. Cl.: H04L 69/04, H04L 67/02

(54) **SYSTEM, TERMINAL, SERVER, AND METHOD FOR DATA TRANSMISSION**
SYSTEM, ENDGERÄT, SERVER UND VERFAHREN ZUR DATENÜBERTRAGUNG
SYSTÈME, TERMINAL, SERVEUR, ET PROCÉDÉ DE TRANSMISSION DE DONNÉES

(30) Priority: 07.05.2015 CN 201510228318
(43) Date of publication of application: 14.03.2018
(73) Proprietor: Alibaba Group Holding Limited, Grand Cayman (KY)
(72) Inventor: MIN, Qinghuan, Hangzhou 311121 (CN); SONG, Chaoyang, Hangzhou 311121 (CN)
(74) Representative: Finnegan Europe LLP
(86) International application number: PCT/US2016/031241
(87) International publication number: WO 2016/179510

(56) References cited:
- US-A1- 2008 034 119
- US-A1- 2008 298 458
- US-A1- 2013 070 746
- US-A1- 2015 067 819
- US-B1- 8 499 100

## Description

### TECHNICAL FIELD

The present disclosure generally relates to the field of computer technology, and more particularly, to a system, terminal, server, and method for data transmission.

### BACKGROUND

In the related art, a method POST has been employed to upload a large amount of data at once. It can be used when a client needs to provide a large message to a server. The POST method includes packaging parameters in an HTTP (Hyper Text Transfer Protocol) request. It can be employed to transmit a large amount of data or documents.

However, there are existing technical constraints, such as issues involved in Asymmetric Digital Subscriber Line (ADSL) and the strategies of the Internet Service Provider (ISP), that cause the upload speed lower than the download speed, resulting in network congestion. Further, HTTP does not include a mechanism to support data compression of the client, which results in wasting network resource, reducing transmission speed, and even more network congestion.

Currently, HTTP requires data submitted by a POST request should be disposed in the entity-body, but does not require the format of the data. Therefore, it allows the client to freely define the format of the data. One problem in current HTTP scheme is that although the client is allowed to define the format of its data using a data compression technique, the server is not necessarily able to decode the compressed data. Because the client does not know the data compression technique that the server uses to decode compressed data, the client may continue to use a data compression technique to encode its data that the serve is unable to decode.

U.S. Patent Application Publication No. US 2008/0034119 is directed towards a system and method for communicating compressed and uncompressed content over a transport layer connection established between an appliance between a client and a server.

### SUMMARY

The invention is carried out as described in the appended claims.

Consistent with embodiments of the present disclosure, there is provided a method for transmitting data by a terminal.

Consistent with embodiments of the present disclosure, there is provided a method for transmitting data by a server.

Consistent with embodiments of the present disclosure, there is provided a terminal for transmitting data according to claim 1.

Consistent with embodiments of the present disclosure, there is provided a server for transmitting data according to claim 6.

Consistent with embodiments of the present disclosure, there is provided a system for transmitting data according to claim 13. The system includes a terminal according to claim 11 and a server according to claim 12.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a block diagram of an exemplary terminal for transmitting data, consistent with embodiments of the present disclosure.
Fig. 2 is a block diagram of another exemplary terminal for transmitting data, consistent with embodiments of the present disclosure.
Fig. 3 is a block diagram of an exemplary server for transmitting data, consistent with embodiments of the present disclosure.
Fig. 4 is a block diagram of another exemplary server for transmitting data, consistent with embodiments of the present disclosure.
Fig. 5 is a block diagram of an exemplary system for transmitting data, consistent with embodiments of the present disclosure.
Fig. 6 is a block diagram of another exemplary system for transmitting data, consistent with embodiments of the present disclosure.
Fig. 7 is a flow chart showing an exemplary method for transmitting compressed data, consistent with embodiments of the present disclosure.
Fig. 8 is a flow chart showing another exemplary method for transmitting compressed data, consistent with embodiments of the present disclosure.
Fig. 9 is a flow chart showing yet another exemplary method for transmitting compressed data, consistent with embodiments of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

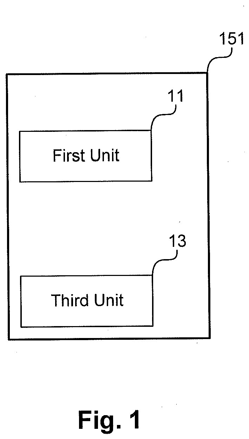

Fig. 1 is a block diagram of an exemplary terminal 151 for transmitting data, consistent with embodiments of the present disclosure. Referring to Fig. 1, the terminal 151 includes a first unit 11 and a third unit 13.

The first unit 11 is configured to transmit a first data transmission request to a server. The first data transmission request includes information indicating a first data compression method. When the server supports the first data compression method, it uses the first data compression method to decode the content of the message body of the first request. The third unit 13 is configured to receive a first data transmission response returned from the server.

In the illustrated embodiment, the terminal 151 may be a computer, a mobile phone, a tablet or the like that is a computing device capable to compute and communicate under HTTP. The first data compression method includes, but does not limited to:
gzip: indicating entity-body is encoded with GNU zip;
compress: indicating entity-body is encoded with Unix document compression procedures; or
deflate: indicating entity-body is compressed with zlib format.
Zlib data format and deflate and gzip file format are standardized, and have corresponding standards defined in RFC 1950, RFC 1951, and RFC 1952, respectively.

In some embodiments, the first data transmission request is a POST request and the first data transmission response is a POST response. The POST request uses, for example, a Content-Encoding section to set up a data compression method. The POST response uses, for example, an Accept-Encoding section to set up a data compression method.

In one embodiment, the first unit 11 transmits a POST request to a server. The POST request includes Content-Encoding section, which indicates a "compress" data compression method. If the server supports "compress" data compression method, it uses the "compress" data compression method to decode the content of the message body and returns a status code "200" to indicate successful receipt of the request. The third unit 13 receives the "200" status code returned from the server. Thus, the server successfully receives data compressed by the "compress" data compression method and transmitted by the POST method. This allows the POST method and Content-Encoding section to be correlated to each other.

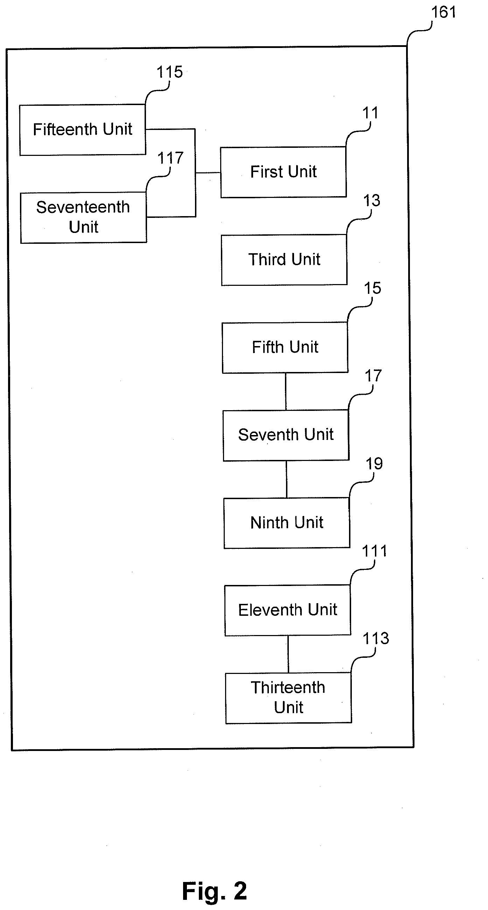

Fig. 2 is a block diagram of an exemplary terminal 161 for transmitting data, consistent with embodiments of the present disclosure. Referring to Fig. 2, terminal 161 includes a first unit 11, a third unit 13, a fifth unit 15, a seventh unit 17, and a ninth unit 19.

The first unit 11 is configured to transmit a first data transmission request to a server. The first data transmission request includes information indicating a first data compression method. When the server supports the first data compression method, it uses the first data compression method to decode the content of the message body of the first data compression request. The third unit 13 is configured to receive a first data transmission response returned from the server. The fifth unit 15 is configured to receive a second data transmission response returned from the server. The second data transmission response includes information indicating a second data compression method that the server supports. The seventh unit 17 is configured to encode the first data transmission request with the second data compression method to generate a second data transmission request. The ninth unit 19 is configured to transmit the second data transmission request to the server. The second data transmission request includes the second data compression method.

In the illustrated embodiment, the terminal 161 may be a computer, a mobile phone, a tablet, or the like that is a computing device capable to compute and communicate under HTTP. The first data compression method is a method that the terminal 161 supports. The second data compression method is a method that the server supports. The first data transmission response does not include information indicating a data compression method. The second data transmission response includes information indicating a data compression method that the server supports. The data compression methods include, but does not limited to, gzip, compress, deflate, and zlib data format.

In some embodiments, the requests for data transmission are POST requests and the data transmission responses are POST responses. The POST requests use, for example, a Content-Encoding section to set up a data compression method. The POST responses use, for example, an Accept-Encoding section to set up a data compression method.

The Accept-Encoding section indicates an acceptable data compression method and the Content-Encoding section indicates what kind of data compression method is used to compress the message body. HTTP provides Accept-Encoding section and Content-Encoding section. Section 5.3.4 of RFC7231 defines that Accept-Encoding can only be used in a heading of a request. The terminal can include Content-Encoding section in a message, uses a corresponding data compression method to encode data, and uses POST to upload the encoded message. But the server may not be able to use the data compression method to decode the encoded message while the server supports other kinds of data compression methods. Because conventionally Accept-Encoding section can only be included in the heading of a request, no mechanism exists for the terminal to obtain a response from the server in this regard. In the present disclosure, it is proposed to expand the use of Accept-Encoding section and allow the Accept-Encoding section to be used in server's responses to notify the terminal what kind of data compression methods that the server supports. This can allow the terminal to obtain information of the decoding capability of the server. The details of including the Accept-Encoding section in a POST response are explained below.

In one embodiment, the first unit 11 sends a first POST request to the server. The first POST request includes a Content-Encoding section, which includes "compress" data compression method. However, the server does not support the "compress" data compression method, but rather supports "gzip" data compression method. The server then returns a POST response based on the first POST request. The POST response includes an Accept-Encoding section, which includes the "gzip" data compression method. The fifth unit 15 receives the POST response returned from the server. When the terminal supports the "gzip" data compression method, the seventh unit 17 uses the "gzip" data compression method to encode the message body of the POST request to generate a second POST request. The terminal then controls the ninth unit 19 to send the second POST request to the server. The second POST request includes a Content-Encoding section, which includes "gzip" data compression method. Because the server supports the "gzip" data compression method, it uses this method to decode the second POST request and returns the 200 status code under HTTP to the terminal. The third unit 13 receives the 200 status code returned from the server. In the illustrated embodiment, the server successfully receives data compressed by "gzip" data compression method and transmitted based on POST method. This allows Content-Encoding section and Accept-Encoding section to be used with the POST method.

In some embodiments, referring again to Fig. 2, the terminal 161 may further include a eleventh unit 111 and a thirteenth unit 113.

The eleventh unit 111 is configured to receive a third data transmission response returned from the server. The third data transmission response includes information indicating that the serve does not support data compression method. The thirteenth unit 113 is configured to sends a third data transmission request based on the third data transmission response. The third data transmission request does not include any data compression method.

In one embodiment, the first unit 11 sends a first POST request to the server. The first POST request includes a Content-Encoding section, which includes a "compress" data compression method. However, the server does not support any data compression method. The server then returns a POST response based on the first POST request. The POST response includes an Accept-Encoding section, which includes an unsupportive message indicating that the server does not support any data compression method. In the illustrated embodiment, the unsupportive message is "identity", which is included in Accept-Encoding section of the response returned from the server to show that the server does not support any data compression method. The eleventh unit 111 receives the POST response returned from the server. Terminal 161 uses the thirteenth unit 113 to send a second POST request based on the "identity." The second POST request does not include any data compression method. The server receives the second POST request. If the server can correctly respond, it sends the 200 status code to the terminal 161. If the server does not have the requested resource, it sends a 404 status code to the terminal 161. If the server has a procedure error, it sends a 500 status code to the terminal 161.

In some embodiments, referring again to Fig. 2, the terminal 161 may further include a fifteenth unit 115 and a seventeenth unit 117.

The fifteenth unit 115 is configured to set up the first data compression method for the first data transmission request. The seventeenth unit 117 is configured to encode the message body of the first request according to the first data compression method.

In one embodiment, before the terminal 161 provides data to the server, it uses the fifteenth unit 115 to set up a data compression method that the terminal 161 supports for the POST request. The terminal 161 also employs the seventeenth unit 117 to compress the content of the message body of the POST request with the data compression method. The first unit 11 then sends the POST request to the server. The server responds based on whether it supports the data compression method in the POST response.

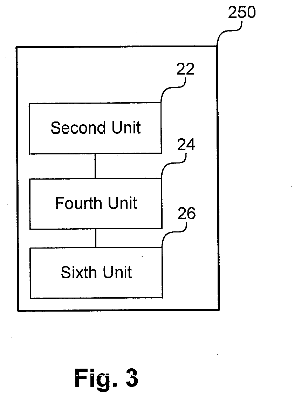

Fig 3 is a block diagram showing an exemplary server 250 for transmitting compressed data, consistent with embodiments of the present disclosure. Server 250 may be a computer, mobile phone, a tablet computer, or the like. Referring to Fig. 3, the server 250 includes a second unit 22, a fourth unit 24, and a sixth unit 26.

The second unit 22 is configured to receive a first data transmission request from a terminal. The first data transmission request includes a first data compression method. The fourth unit 24 is configured to, when server 250 supports the first data compression method, decode the content of the message body of first data transmission request. The sixth unit 26 is configured to return a first data transmission response to the terminal.

In the illustrated embodiment, the first data compression method is a method that the terminal supports. The data compression method includes, but not limited to, gzip, compress, deflate, and zlib data format.

In some embodiments, the data transmission request is a POST request and the data transmission response is a POST response. The POST request uses, for example, a Content-Encoding section to set up a data compression method. The POST responses use, for example, an Accept-Encoding section to set up a data compression method.

In one embodiment, the second unit 22 receives the POST request from the terminal. The POST request includes Content-Encoding section, which indicates a "compress" data compression method. If the server supports the "compress" data compression method, the fourth unit 24 uses the "compress" data compression method to decode the content of the message body of the request. The sixth unit 26 returns a status code "200" to indicate successful receipt of the request.

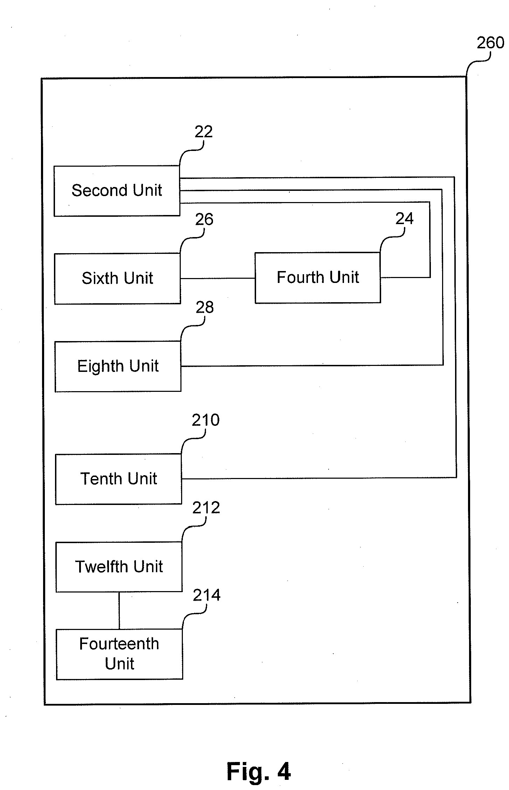

Fig 4 is a block diagram showing an exemplary server 260 for transmitting compressed data, consistent with embodiments of the present disclosure. Server 260 may be a computer, a mobile phone, a tablet computer, or the like. Referring to Fig. 4, the server 260 includes a second unit 22, a fourth unit 24, a sixth unit 26, and an eighth unit 28.

The second unit 22 is configured to receive a first data transmission request from a terminal. The first data transmission request includes a first data compression method. The fourth unit 24 is configured to, when server 260 supports the first data compression method, decode the content of the message body of first data transmission request. The sixth unit 26 is configured to return a first data transmission response to the terminal. The eighth unit 28 is configured to, when server 260 does not support the first data compression method, return a second data transmission response to the terminal. The second data transmission response includes a second data compression method that the server 260 supports.

In the illustrated embodiment, the first data compression method is a method that the terminal 161 supports. The second data compression method is a method that the server 260 supports. The first data transmission response does not include information indicating a data compression method. The second data transmission response includes information indicating a data compression method that the server 260 supports. The data compression methods include, but are not limited to, gzip, compress, deflate, and zlib data format.

In some embodiments, the first data transmission request is a POST request and the data transmission response is a POST response. The POST request uses, for example, a Content-Encoding section to set up a data compression method. The POST responses use, for example, an Accept-Encoding section to set up a data compression method.

In one embodiment, the second unit 22 receives a first POST request from the terminal. The first POST request includes Content-Encoding section, which indicates a "compress" data compression method. However, the server 260 does not support the "compress" data compression method, but rather supports "gzip" data compression method. The eighth unit 28 returns a second POST response to the terminal. The second POST response includes an Accept-Encoding section, which includes the "gzip" data compression method. When the terminal supports the "gzip" data compression method, it uses the "gzip" data compression method to encode the content of the message body of the first POST request to generate a second POST request. The terminal sends the second POST request to the server 260. The second POST request includes a Content-Encoding section, which indicates the "gzip" data compression method. Because the server 260 supports the "gzip" data compression method, the fourth unit 24 uses the "gzip" data compression method to decode the content of the message body of the second POST request. The sixth unit 26 returns a status code "200" under HTTP to indicate successful receipt of the request. The server 260 successfully receives data compressed by the "gzip" data compression method and transmitted with the POST method. This allows Content-Encoding section and Accept-Encoding section to be used with the POST method.

In some embodiments, referring again to Fig. 4, the server 260 may further include a tenth unit 210.

The tenth unit 210 is configured to, when the server 260 does not support any data compression method, return a third data transmission response to the terminal. The third data transmission response includes information indicating that the server 260 does not support any data compression method.

In some embodiments, "identity" is used to indicate that the server does not support any data compression method. When the server 260 does not support any data compression method, it includes "identity" in Accept-Encoding section. For example, the terminal sends a first POST request to the second unit 22. The first POST request includes a Content-Encoding section, which includes a "compress" data compression method. However, the server 260 does not support any data compression method. The tenth unit 210 returns a POST response based on the first POST request. The POST response includes an Accept-Encoding section, which includes an unsupportive message indicating that the server does not support any data compression method. After receiving the POST response, the terminal sends a second POST request. The second POST request does not include any data compression method. The server 260 receives the second POST request. If the server 260 can correctly respond, it sends the 200 status code to the terminal 161. If the server 260 does not have the requested resource, it sends a 404 status code to the terminal 161. If the server 260 has a procedure error, it sends a 500 status code to the terminal 161.

In some embodiments, referring again to Fig. 4, the server 260 may further include a twelfth unit 212 and a fourteenth unit 214.

The twelfth unit 212 is configured to, when receiving a data transmission request from a terminal, determine whether the request includes any data compression method. If the request includes no data compression method, the fourteenth unit 214 is configured to process the request without de-compress the request.

In one embodiment, when receiving a data transmission request from a terminal, the twelfth unit 212 first determines whether the request includes any data compression method. If the request includes no data compression method, the fourteenth unit 214 processes the request without de-compress the request under HTTP, that is, the server 260 does not perform de-compression on the received data. For example, if the server 260 can correctly respond, the fourteenth unit 214 returns the 200 status code to the terminal. If the server 260 does not have the requested resource, the fourteenth unit 214 returns a 404 status code to the terminal. If the server 260 has a procedure error, the fourteenth unit 214 returns a 500 status code to the terminal.

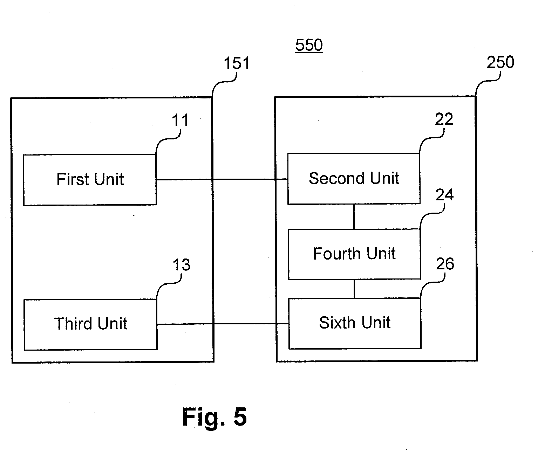

Fig. 5 is a block diagram showing an exemplary system 550 for transmitting data, consistent with embodiments of the present disclosure. As shown in Fig. 5, the system 550 includes the terminal 151 shown in Fig. 1 and the server 250 shown in Fig. 3.

In the illustrated embodiment, the terminal 151 includes a first unit 11 and a third unit 13, and the server 250 includes a second unit 22, a fourth unit 24, and a sixth unit 26.

The first unit 11 sends a first data transmission request to the second unit 22. The first data transmission request includes a first data compression method. When the server 250 supports the first data compression method, the fourth unit 24 decodes the content of the message body of the first request according to the first data compression method. The sixth unit 26 returns a data transmission response to the third unit 13.

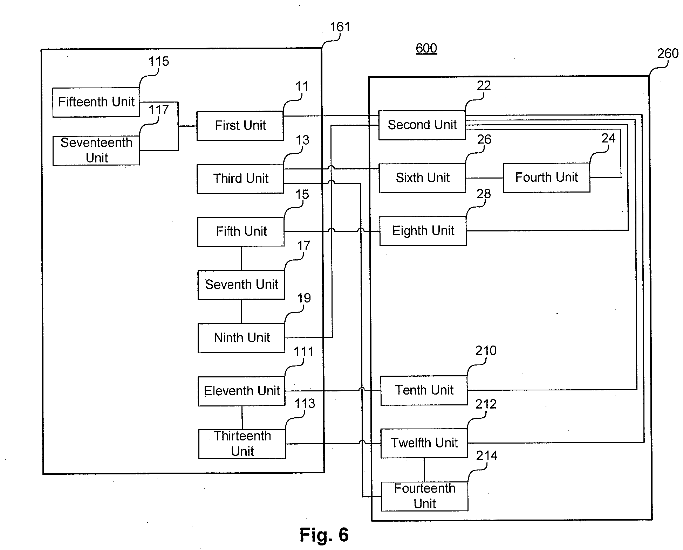

Fig. 6 is a block diagram showing an exemplary system 600 for transmitting data, consistent with embodiments of the present disclosure. As shown in Fig. 6, the system 600 includes the terminal 161 shown in Fig. 2 and the server 260 shown in Fig. 4.

In the illustrated embodiment, the terminal 161 includes a first unit 11, a third unit 13, a fifth unit 15, a seventh unit 17, and a ninth unit 19. The server 260 includes a second unit 22, a fourth unit 24, a sixth unit 26, and an eighth unit 28.

The first unit 11 sends a first data transmission request to the second unit 22. The first data transmission request includes a first data compression method.

When the server 260 supports the first data compression method, the fourth unit 24 decodes the content of the message body of the first request according to the first data compression method. The sixth unit 26 returns a first data transmission response to the third unit 13.

When the server 260 does not support the first data compression method, the eighth unit 28 returns a second data transmission response to the fifth unit 15. The second data transmission response includes a second data compression method that the server 260 supports. The seventh unit 17 encodes the content of message body of the first data transmission request based on the second data compression method to generate a second data transmission request. The nineteenth unit 19 sends the second data transmission request to the second unit 22. The second data transmission request includes the second data compression method. Because the server 260 supports the second data compression method, the fourth unit 24 decodes the content of the message body of the second data transmission request. The sixth unit 26 returns the first data transmission response to the third unit 13.

In some embodiments, the terminal 161 may further include an eleventh unit 111 and a thirteenth unit 113. The server 260 may further include a tenth unit 210, a twelfth unit 212, and a fourteenth unit 114.

In the illustrated embodiment, when the server 260 does not support any data compression method, the tenth unit 210 returns a third data transmission response to the eleventh unit 111. The third data transmission response includes an unsupportive message indicating that the server 260 does not support any data compression method. The thirteenth unit 113 sends a third data transmission request to the twelfth unit 112 based on the unsupportive message. The third data transmission request does not include a data compression method. When receiving the third data transmission request from a terminal, the twelfth unit 212 first determines whether the request includes any data compression method. If the third request includes no data compression method, the fourteenth unit 214 processes the request without de-compress the request under HTTP, that is, the server 260 does not perform de-compression on the received data. For example, if the server 260 can correctly respond, the fourteenth unit 214 returns the 200 status code to the terminal. If the server 260 does not have the requested resource, the fourteenth unit 214 returns a 404 status code to the terminal. If the server 260 has a procedure error, the fourteenth unit 214 returns a 500 status code to the terminal.

In some embodiments, the terminal 161 may further include a fifteenth unit 115 and a seventeenth unit 117.

The fifteenth unit 115 is configured to set up the first data compression method for the first data transmission request. The seventeenth unit 117 is configured to encode the message body of the first request according to the first data compression method to generate the first data transmission request, which is sent by the first unit 11 to the second unit 22.

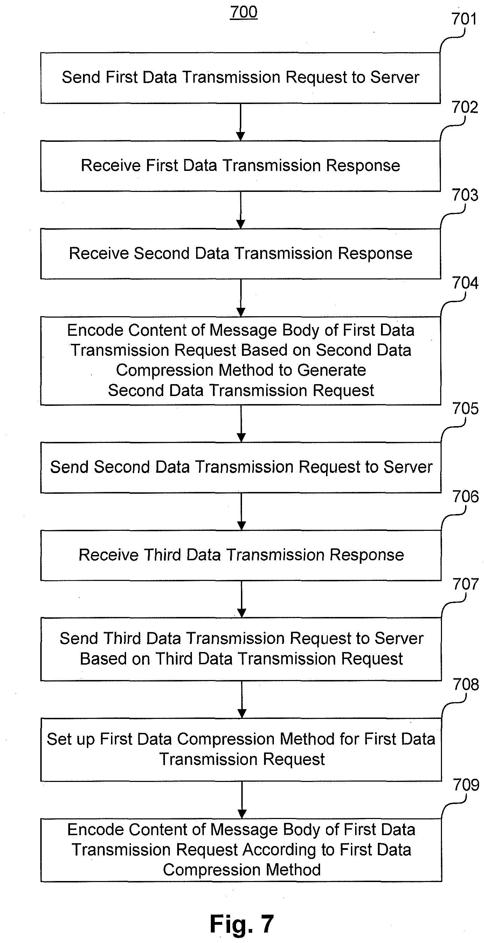

Fig. 7 is a flow chart showing an exemplary method 700 for transmitting compressed data, consistent with embodiments of the present disclosure. Method 700 may be performed in a terminal, such as the terminal 151 and 161, shown in Figs. 1 and 2. Referring to Fig. 7, the method 700 includes the following steps.

In step 701, the terminal sends a first data transmission request to a server. The first data transmission request includes a first data compression method. When the server supports the first data compression method, it decodes the content of the message body of the first data transmission request according to the first data compression method.

In step 702, the terminal receives a first data transmission response returned from the server.

In some embodiments, the first data transmission request is a POST request and the first data transmission response is a POST response. The POST request uses, for example, a Content-Encoding section to set up a data compression method. The POST response use, for example, an Accept-Encoding section to set up a data compression method.

In one embodiment, a terminal transmits a POST request to a server. The POST request includes a Content-Encoding section, which indicates a "compress" data compression method. If the server supports "compress" data compression method, it uses the "compress" data compression method to decode the content of the message body of the POST request and returns a status code "200" under HTTP to indicate successful receipt of the request. Thus, the server successfully receives data compressed by "compress" data compression method and transmitted by the POST method. This allows the Content-Encoding section to be used with the POST method.

In some embodiments, referring again to Fig. 7, the method 700 further includes the following steps.

In step 703, the terminal receives a second data transmission response returned from the server. The second data transmission response includes a second data compression method that the server supports.

In step 704, the terminal encodes the content of message body of the first data transmission request based on the second data compression method to generate a second data transmission request.

In step 705, the terminal sends the second data transmission request to the server. The second data transmission request includes the second data compression method.

In one embodiment, the terminal sends a first POST request to the server. The first POST request includes a Content-Encoding section, which indicates a "compress" data compression method. However, the server does not support the "compress" data compression method, but rather supports "gzip" data compression method. The server returns a POST response to the terminal. The POST response includes an Accept-Encoding section, which includes the "gzip" data compression method. When the terminal supports the "gzip" data compression method, it uses the "gzip" data compression method to encode the content of the message body of the first POST request to generate a second POST request. The terminal sends the second POST request to the server. The second POST request includes a Content-Encoding section, which indicates the "gzip" data compression method. Because the server supports the "gzip" data compression method, the server uses the "gzip" data compression method to decode the content of the message body of the second POST request. The server returns a status code "200" under HTTP to indicate successful receipt of the request. The server successfully receives data compressed by the "gzip" data compression method and transmitted with the POST method. This allows Content-Encoding section and Accept-Encoding section to be used with the POST method.

In some embodiments, referring again to Fig. 7, the method 700 further includes the following steps.

In step 706, the terminal receives a third data transmission response. The third data transmission response includes an unsupportive message indicating that the server does not support data compression.

In step 707, the terminal sends a third data transmission request to the server based on the unsupportive message included in the third data transmission response. The third data transmission request does not include any data compression method.

For example, the server does not support any data compression method. The server returns a POST response based on the first POST request. The POST response includes an Accept-Encoding section, which includes an unsupportive message "identity." The terminal receives the POST response returned from the server, and sends a second POST request based on the "identity." The second POST request does not include any data compression method. The server receives the second POST request. If the server can correctly respond, it sends the 200 status code to the terminal. If the server does not have the requested resource, it sends the 404 status code to the terminal. If the server has a procedure error, it sends the 500 status code to the terminal.

In some embodiments, the method 700 may further include the following steps.

In step 708, the terminal sets up the first data compression method for the first data transmission request.

In step 709, the terminal encodes the content of the message body of the first data transmission request according to the first data compression method.

In one embodiment, before the terminal provides data to the server, it sets up a data compression method that the terminal supports for the POST request. The terminal also encodes the content of the message body of the POST request with the data compression method. The terminal then sends the POST request to the server. The server responds based on whether it supports the data compression method with a POST response.

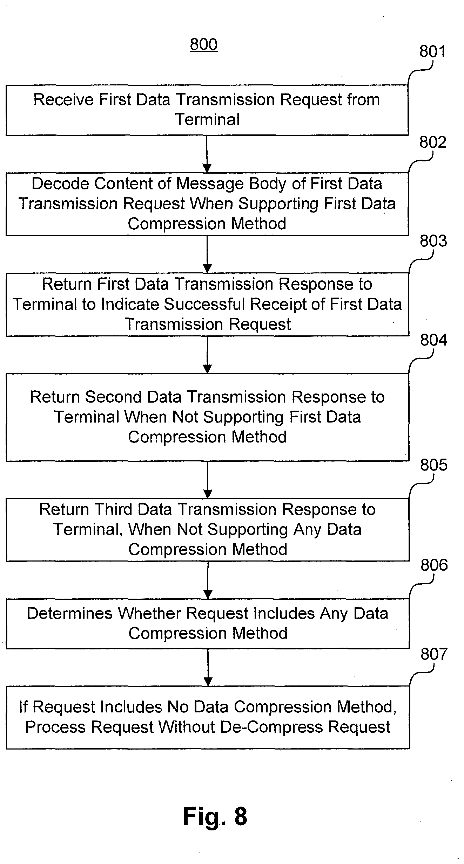

Fig. 8 is a flow chart showing an exemplary method 800 for transmitting data, consistent with embodiments of the present disclosure. Method 800 may be performed in a server, such as server 250 and 260, shown in Figs, 3 and 4. Referring to Fig. 8, the method 800 includes the following steps.

In step 801, the server receives a first data transmission request from a terminal. The first data transmission request includes a first data compression method.

In step 802, the server, when it supports the first data compression method, decodes the content of the message body of first data transmission request.

In step 803, the server returns a first data transmission response to the terminal.

In some embodiments, the first data transmission request is a POST request and the data transmission response is a POST response. The POST request uses, for example, a Content-Encoding section to set up a data compression method. The POST response uses, for example, an Accept-Encoding section to set up a data compression method.

In one embodiment, the server receives a POST request from a terminal. The POST request includes Content-Encoding section, which indicates a "compress" data compression method. If the server supports "compress" data compression method, it uses the "compress" data compression method to decode the content of the message body of the POST request and returns a status code "200" under HTTP to indicate successful receipt of the request.

In some embodiments, the method 800 may further include a step 804.

In step 804, the server, when it does not support the first data compression method, returns a second data transmission response. The second data transmission response includes a second data compression method that the server supports.

In one embodiment, the server receives a first POST request from the terminal. The first POST request includes Content-Encoding section, which indicates a "compress" data compression method. However, the server does not support the "compress" data compression method, but rather supports "gzip" data compression method. The server returns a POST response to the terminal. The POST response includes an Accept-Encoding section, which includes the "gzip" data compression method. When the terminal supports the "gzip" data compression method, it uses the "gzip" data compression method to encode the content of the message body of the first POST request to generate a second POST request. The terminal sends the second POST request to the server. The second POST request includes a Content-Encoding section, which indicates the "gzip" data compression method. Because the server supports the "gzip" data compression method, the server uses the "gzip" data compression method to decode the content of the message body of the second POST request. The server returns a status code "200" under HTTP to indicate successful receipt of the request. The server successfully receives data compressed by the "gzip" data compression method and transmitted with the POST method. This allows Content-Encoding section and Accept-Encoding section to be used with the POST method.

In some embodiments, the method 800 may further include a step 805.

In step 805, the server returns a third data transmission response to the terminal, when it does not support any data compression method. The third data transmission response includes information indicating that the serve does not support a data compression method.

In one embodiment, when the server does not support any data compression method, it returns a POST response based on the first POST request. The POST response includes an Accept-Encoding section, which includes an "identity" message. The terminal, after receiving the POST response, sends a second POST request. The second POST request does not include any data compression method. The server receives the second POST request. If the server can correctly respond, it sends the 200 status code to the terminal. If the server does not have the requested resource, it sends the 404 status code to the terminal. If the server has a procedure error, it sends the 500 status code to the terminal.

In some embodiments, the method 800 may further includes steps 806 and 807.

In step 806, when receiving the first data transmission request from the terminal, the server determines whether the request includes any data compression method.

In step 807, if the request includes no data compression method, the server processes the request without de-compress the request.

In the illustrated embodiment, when receiving a data transmission request from the terminal, the server first determines whether the data transmission request includes any data compression method. If the data transmission request includes no data compression method, the server processes the request without de-compress the request. For example, If the server can correctly respond, it sends the 200 status code to the terminal. If the server does not have the requested resource, it sends the 404 status code to the terminal. If the server has a procedure error, it sends the 500 status code to the terminal.

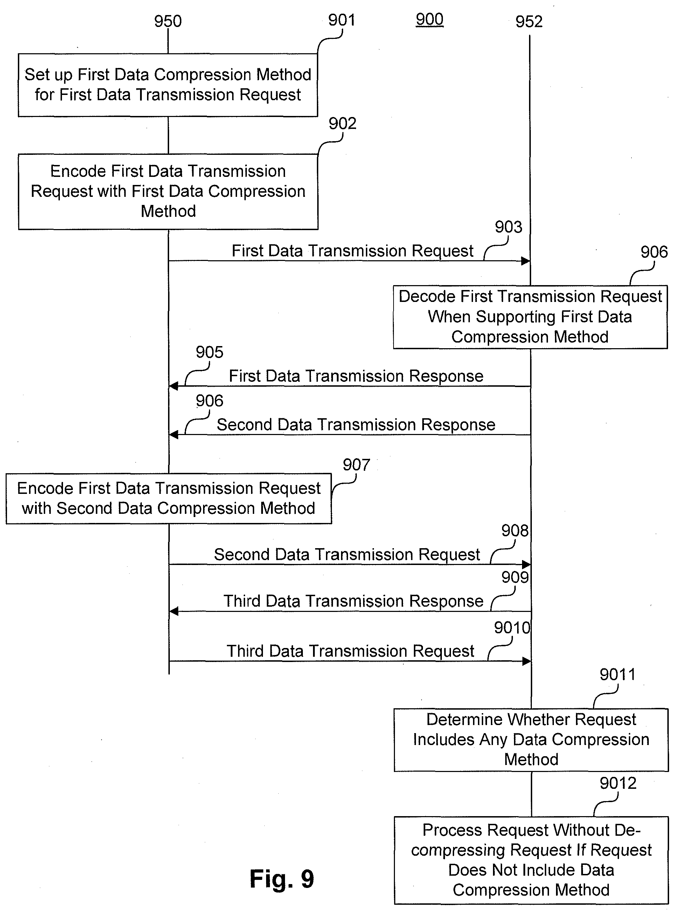

Fig. 9 is a flow chart showing an exemplary method 900 for transmitting data between a terminal 950 and a server 952, consistent with embodiments of the present disclosure. Referring to Fig. 9, the method 900 includes the following steps.

In step 901, the terminal 950 sets up a first data compression method for a first data transmission request.

In step 902, the terminal 950 encodes the content of the message body of the first data transmission request according to the first data compression method.

In the illustrated embodiment, before the terminal 950 provides data to the server 952, it sets up a first data compression method that the terminal 950 supports in the POST request. The terminal 950 also encodes the content of the message body of the POST request with the first data compression method. The terminal 950 then sends the POST request to the server 952. The server 952 responds based on whether it supports the data compression method with a POST response.

In step 903, the terminal 950 sends the first data transmission request to the server 952. The first data transmission request includes the first data compression method.

In step 904, when supporting the first data compression method, the server 952 decodes the content of the message body of the first data transmission request according to the first data compression method.

In step 905, the server 952 returns a first data transmission response to the terminal 950.

For example, the terminal 950 transmits a POST request to the server 952. The POST request includes Content-Encoding section, which indicates a "compress" data compression method. If supporting the "compress" data compression method, the server 952 uses the "compress" data compression method to decode the content of the message body of the POST request and returns a status code "200" under HTTP to indicate successful receipt of the request. Thus, the server 952 can successfully receive data compressed by "compress" data compression method and transmitted by the POST method.

In step 906, the server 952, when it does not support the first data compression method, returns a second data transmission response to the terminal 950. The second data transmission response includes a second data compression method that the server 952 supports.

In step 907, the terminal 950 encodes the content of message body of the first data transmission request based on the second data compression method to generate a second data transmission request.

In step 908, the terminal 950 sends the second data transmission request to the server 952. The second data transmission request includes the second data compression method.

For example, the server 952 does not support the "compress" data compression method, but rather supports "gzip" data compression method. The server 952 returns a POST response to the terminal 950. The POST response includes an Accept-Encoding section, which includes the "gzip" data compression method. When the terminal 950 supports the "gzip" data compression method, it uses the "gzip" data compression method to encode the content of the message body of the first POST request to generate a second POST request. The terminal 950 sends the second POST request to the server 952. The second POST request includes a Content-Encoding section, which indicates the "gzip" data compression method. Because the server 952 supports the "gzip" data compression method, it uses the "gzip" data compression method to decode the content of the message body of the second POST request. The server 952 returns a status code "200" under HTTP to indicate successful receipt of the request. The server successfully receives data compressed by the "gzip" data compression method and transmitted with the POST method.

In step 909, when the server 952 does not support any data compression method, it returns a third data transmission response to the terminal 950. The third data transmission response includes an unsupportive message indicating that the serve 952 does not support a data compression method.

In step 9010, the terminal 950 sends a third data transmission request to the server 952 based on the unsupportive message included in the third data transmission response. The third data transmission request does not include any data compression method.

In step 9011, when receiving a data transmission request from the terminal 950, the server 950 determines whether the request includes any data compression method.

In step 9012, if the request includes no data compression method, the server 952 processes the request without de-compressing the request.

For example, the server 952 does not support any data compression method. The server 952 returns a third POST response based on the first POST request. The third POST response includes an Accept-Encoding section, which includes an unsupportive message "identity." The terminal 950 receives the third POST response returned from the server 952, and sends a second POST request based on the "identity" message. The second POST request does not include any data compression method. The server 952 receives the second POST request. If the server 952 can correctly respond, it sends the 200 status code to the terminal 950. If the server 952 does not have the requested resource, it sends the 404 status code to the terminal 950. If the server 952 has a procedure error, it sends the 500 status code to the terminal 950. Thus, when the terminal 950 and the server 952 do not support the same data compression method, the data can still be transmitted therebetween.

The illustrated methods, terminals, servers, and systems may be performed by software, hardware, or a combination of software and hardware. For example, they may be implemented in an application-specific integrated circuit (ASIC), general purpose computers, or other hardware devices. In one embodiment, the steps and functions of a unit can be performed by a physical processor. In one embodiment, the steps and their relevant data structures can be stored in a non-transitory computer-readable storage medium, such as a RAM, a magnetic or optical drive, a magnetic disc and the like. In some embodiments, the steps or functions of the present disclosure can be implemented with hardware devices, such as circuits designed to work with the processor to execute the steps or functions.

In some embodiments, all or a portion of the methods can be implemented by computer programs, such as computer instructions, which, when executed by a computer, cause the computer to perform the methods or functions. These computer instructions can be stored in a portable or non-portable, non-transitory computer storage medium, can be transmitted by broadcasting or in a network, and/or can be stored in a memory device of a computing device. A device consistent with the embodiments of the present disclosure includes a memory device configured to store the computer instructions and a processor configured to execute the instructions to perform the methods or embodiments of the present disclosure.

Other embodiments of the invention will be apparent to those skilled in the art from consideration of the specification and practice of the invention disclosed here. This application is intended to cover any variations, uses, or adaptations of the invention as far as they fall within the scope of the appended claims. It is intended that the specification and examples be considered as exemplary only, with a true scope of the invention being indicated by the following claims. The order of the steps or methods may be modified according to the practical needs, as far as they fall within the scope of the appended claims.

It will be appreciated that the present invention is not limited to the exact construction that has been described above and illustrated in the accompanying drawings, and that various modifications and changes can be made as far as they fall within the scope of the appended claims.

It is intended that the scope of the invention only be limited by the appended claims.

## Claims

1. A method for transmitting data by a terminal, comprising:
sending a first data transmission request to a server, the first data transmission request including information indicating a first data compression method, comprising indication of a specific data format, for the server to decode content of a message body of the first data transmission request according to the first data compression method, when the server supports the first data compression method,
and
receiving a first data transmission response from the server;
when the server does not support the first data compression method, receiving a second data transmission response from the server, the second data transmission response including information indicating a second data compression method, comprising indication of a specific data format, that the server supports:
encoding the content of the message body of the first data transmission request according to the second data compression method to generate a second data transmission request; and
sending the second data transmission request to the server, the second data transmission request including the second data compression method.

2. The method of claim 1, further comprising:
receiving a third data transmission response from the server, the third data transmission response including information indicating that the server supports no data compression method; and
sending a third data transmission request to the server, the third data transmission request including no data compression method.

3. The method of any one of claims 1 to 2, further comprising:
setting up the first data compression method for the first data transmission request; and
encoding the content of the message body of first data transmission request according to the first data compression method.

4. The method of any one of claims 1 to 3, wherein the first data transmission request is a POST request, and the first data transmission response is a POST response.

5. The method of claim 4, wherein the POST request uses a Content-Encoding section to set up a data compression method, and the POST response uses an Accept-Encoding section to set up a data compression method.

6. A method for transmitting data by a server, comprising:
receiving a first data transmission request from a terminal, the first data transmission including information indicating a first data compression method comprising indication of a specific data format;
when the server supports the first data compression method, decoding content of a message body of the first data transmission request according to the first data compression method,
and
returning a first data transmission response to the terminal; and
when the server does not support the first data compression method, returning a second data transmission response to the terminal, the second data transmission response including information indicating a second data compression method, comprising indication of a specific data format, that the server supports

7. The method of claim 6, further comprising:
when the server does not support any data transmission method, returning a third data transmission response to the terminal, the third data transmission response including information indicating that the server supports no data compression method.

8. The method of any one of claims 6 to 7, further comprising:
when receiving a data transmission request from the terminal, determining whether the data transmission request includes a data compression method; and
when the data transmission request includes no data transmission method, performing no de-compression on the data transmission request.

9. The method of any one of claims 6 to 8, wherein the first data transmission request is a POST request, and the first data transmission response is a POST response.

10. The method of claim 9, wherein the POST request uses a Content-Encoding section to set up a data compression method, and the POST response uses an Accept-Encoding section to set up a data compression method.

11. A terminal for transmitting data, comprising:
a memory storing computer instructions; and
a processor configured to execute the computer instructions to cause the terminal to perform the method of any of claims 1 to 5.

12. A server for transmitting data, comprising:
a memory storing computer instructions; and
a processor configured to execute the computer instructions to perform the method of any of claims 6 to 10.

13. A system for transmitting data, comprising:
the terminal of claim 11 and the server of claim 12.

## Patentansprüche

1. Verfahren zum Übertragen von Daten durch ein Endgerät, umfassend:
Senden einer ersten Datenübertragungsanforderung an einen Server, wobei die erste Datenübertragungsanforderung Informationen beinhaltet, die ein erstes Datenkompressionsverfahren angeben, umfassend eine Angabe eines spezifischen Datenformats, damit der Server Inhalt eines Nachrichtenkörpers der ersten Datenübertragungsanforderung gemäß dem ersten Datenkompressionsverfahren dekodiert, wenn der Server das erste Datenkompressionsverfahren unterstützt, und
Empfangen einer ersten Datenübertragungsantwort von dem Server;
wenn der Server das erste Datenkompressionsverfahren nicht unterstützt, Empfangen einer zweiten Datenübertragungsantwort von dem Server, wobei die zweite Datenübertragungsantwort Informationen beinhaltet, die ein zweites Datenkompressionsverfahren angeben, umfassend eine Angabe eines spezifischen Datenformats, das der Server unterstützt;
Kodieren des Inhalts des Nachrichtenkörpers der ersten Datenübertragungsanforderung gemäß dem zweiten Datenkompressionsverfahren, um eine zweite Datenübertragungsanforderung zu generieren; und
Senden der zweiten Datenübertragungsanforderung an den Server, wobei die zweite Datenübertragungsanforderung das zweite Datenkompressionsverfahren beinhaltet.

2. Verfahren nach Anspruch 1, ferner umfassend:
Empfangen einer dritten Datenübertragungsantwort von dem Server, wobei die dritte Datenübertragungsantwort Informationen beinhaltet, die angeben, dass der Server kein Datenkompressionsverfahren unterstützt; und
Senden einer dritten Datenübertragungsanforderung an den Server, wobei die dritte Datenübertragungsanforderung kein Datenkompressionsverfahren beinhaltet.

3. Verfahren nach einem der Ansprüche 1 bis 2, ferner umfassend:
Einrichten des ersten Datenkompressionsverfahrens für die erste Datenübertragungsanforderung; und
Kodieren des Inhalts des Nachrichtenkörpers der ersten Datenübertragungsanforderung gemäß dem ersten Datenkompressionsverfahren.

4. Verfahren nach einem der Ansprüche 1 bis 3, wobei die erste Datenübertragungsanforderung eine POST-Anforderung ist und die erste Datenübertragungsantwort eine POST-Antwort ist.

5. Verfahren nach Anspruch 4, wobei die POST-Anforderung einen Content-Encoding-Abschnitt verwendet, um ein Datenkompressionsverfahren einzurichten, und die POST-Antwort einen Accept-Encoding-Abschnitt verwendet, um ein Datenkompressionsverfahren einzurichten.

6. Verfahren zum Übertragen von Daten durch einen Server, umfassend:
Empfangen einer ersten Datenübertragungsanforderung von einem Endgerät, wobei die erste Datenübertragung Informationen beinhaltet, die ein erstes Datenkompressionsverfahren angeben, umfassend eine Angabe eines spezifischen Datenformats;
wenn der Server das erste Datenkompressionsverfahren unterstützt, Dekodieren von Inhalt eines Nachrichtenkörpers der ersten Datenübertragungsanforderung gemäß dem ersten Datenkompressionsverfahren, und
Rückgeben einer ersten Datenübertragungsantwort an das Endgerät; und
wenn der Server das erste Datenkompressionsverfahren nicht unterstützt, Rückgeben einer zweiten Datenübertragungsantwort an das Endgerät, wobei die zweite Datenübertragungsantwort Informationen beinhaltet, die ein zweites Datenkompressionsverfahren angeben, umfassend eine Angabe eines spezifischen Datenformats, das der Server unterstützt.

7. Verfahren nach Anspruch 6, ferner umfassend:
wenn der Server kein Datenübertragungsverfahren unterstützt, Rückgeben einer dritten Datenübertragungsantwort an das Endgerät, wobei die dritte Datenübertragungsantwort Informationen beinhaltet, die angeben, dass der Server kein Datenkompressionsverfahren unterstützt.

8. Verfahren nach einem der Ansprüche 6 bis 7, ferner umfassend:
bei Empfangen einer Datenübertragungsanforderung von dem Endgerät, Bestimmen, ob die Datenübertragungsanforderung ein Datenkompressionsverfahren beinhaltet; und
wenn die Datenübertragungsanforderung kein Datenübertragungsverfahren beinhaltet, Ausführen keiner Dekompression an der Datenübertragungsanforderung.

9. Verfahren nach einem der Ansprüche 6 bis 8, wobei die erste Datenübertragungsanforderung eine POST-Anforderung ist und die erste Datenübertragungsantwort eine POST-Antwort ist.

10. Verfahren nach Anspruch 9, wobei die POST-Anforderung einen Content-Encoding-Abschnitt verwendet, um ein Datenkompressionsverfahren einzurichten, und die POST-Antwort einen Accept-Encoding-Abschnitt verwendet, um ein Datenkompressionsverfahren einzurichten.

11. Endgerät zum Übertragen von Daten, umfassend:
einen Speicher, der Computeranweisungen speichert; und
einen Prozessor, der konfiguriert ist, um die Computeranweisungen auszuführen, um das Endgerät zu veranlassen, das Verfahren nach einem der Ansprüche 1 bis 5 durchzuführen.

12. Server zum Übertragen von Daten, umfassend:
einen Speicher, der Computeranweisungen speichert; und
einen Prozessor, der konfiguriert ist, um die Computeranweisungen auszuführen, um das Verfahren nach einem der Ansprüche 6 bis 10 durchzuführen.

13. System zum Übertragen von Daten, umfassend:
das Endgerät nach Anspruch 11 und den Server nach Anspruch 12.

## Revendications

1. Procédé permettant de transmettre des données au moyen d'un terminal, comprenant :
l'envoi d'une première demande de transmission de données à un serveur, la première demande de transmission de données comprenant des informations indiquant un premier procédé de compression de données, comprenant l'indication d'un format de données spécifique, pour que le serveur décode le contenu d'un corps de message de la première demande de transmission de données conformément au premier procédé de compression de données, lorsque le serveur prend en charge le premier procédé de compression de données,
et
la réception d'une première réponse de transmission de données provenant du serveur ;
lorsque le serveur ne prend pas en charge le premier procédé de compression de données, la réception d'une deuxième réponse de transmission de données provenant du serveur, la deuxième réponse de transmission de données comprenant des informations indiquant un second procédé de compression de données, comprenant l'indication d'un format de données spécifique, que le serveur prend en charge ;
le codage du contenu du corps de message de la première demande de transmission de données conformément au second procédé de compression de données de manière à générer une deuxième demande de transmission de données ; et
l'envoi de la deuxième demande de transmission de données au serveur, la deuxième demande de transmission de données comprenant le second procédé de compression de données.

2. Procédé selon la revendication 1, comprenant en outre :
la réception d'une troisième réponse de transmission de données provenant du serveur, la troisième réponse de transmission de données comprenant des informations indiquant que le serveur ne prend en charge aucun procédé de compression de données ; et
l'envoi d'une troisième demande de transmission de données au serveur, la troisième demande de transmission de données ne comprenant aucun procédé de compression de données.

3. Procédé selon l'une quelconque des revendications 1 à 2, comprenant en outre :
la configuration du premier procédé de compression de données pour la première demande de transmission de données ; et
le codage du contenu du corps de message de la première demande de transmission de données conformément au premier procédé de compression de données.

4. Procédé selon l'une quelconque des revendications 1 à 3, ladite première demande de transmission de données étant une demande POST, et ladite première réponse de transmission de données étant une réponse POST.

5. Procédé selon la revendication 4, ladite demande POST utilisant une section Contenu-Codage pour configurer un procédé de compression de données, et ladite réponse POST utilisant une section Accepter-Codage pour configurer un procédé de compression de données.

6. Procédé permettant de transmettre des données au moyen d'un serveur, comprenant :
la réception d'une première demande de transmission de données provenant d'un terminal, la première transmission de données comprenant des informations indiquant un premier procédé de compression de données comprenant l'indication d'un format de données spécifique ;
lorsque le serveur prend en charge le premier procédé de compression de données, le décodage du contenu d'un corps de message de la première demande de transmission de données conformément au premier procédé de compression de données,
et
le renvoi d'une première réponse de transmission de données au terminal ; et
lorsque le serveur ne prend pas en charge le premier procédé de compression de données, le renvoi d'une deuxième réponse de transmission de données au terminal, la deuxième réponse de transmission de données comprenant des informations indiquant un second procédé de compression de données comprenant l'indication d'un format de données spécifique, que le serveur prend en charge.

7. Procédé selon la revendication 6, comprenant en outre :
lorsque le serveur ne prend en charge un quelconque procédé de transmission de données, le renvoi d'une troisième réponse de transmission de données au terminal, la troisième réponse de transmission de données comprenant des informations indiquant que le serveur ne prend en charge aucun procédé de compression de données.

8. Procédé selon l'une quelconque des revendications 6 à 7, comprenant en outre :
lors de la réception d'une demande de transmission de données provenant du terminal, la détermination pour savoir si la demande de transmission de données comprend un procédé de compression de données ; et
lorsque la demande de transmission de données ne comprend aucun procédé de transmission de données, la réalisation d'aucune décompression sur la demande de transmission de données.

9. Procédé selon l'une quelconque des revendications 6 à 8, ladite première demande de transmission de données étant une demande POST, et ladite première réponse de transmission de données étant une réponse POST.

10. Procédé selon la revendication 9, ladite demande POST utilisant une section Contenu-Codage pour configurer un procédé de compression de données, et ladite réponse POST utilisant une section Accepter-Codage pour configurer un procédé de compression de données.

11. Terminal permettant de transmettre des données, comprenant :
une mémoire stockant des instructions informatiques ; et
un processeur configuré pour exécuter les instructions informatiques de manière à amener le terminal à réaliser le procédé selon l'une quelconque des revendications 1 à 5.

12. Serveur permettant de transmettre des données, comprenant :
une mémoire stockant des instructions informatiques ; et
un processeur configuré pour exécuter les instructions informatiques de manière à réaliser le procédé selon l'une quelconque des revendications 6 à 10.

13. Système permettant de transmettre des données, comprenant :
le terminal selon la revendication 11 et le serveur selon la revendication 12.
